# EUROPÄISCHE PATENTSCHRIFT

(11) **EP 2 451 728 B1**
(45) Veröffentlichungstag und Bekanntmachung des Hinweises auf die Patenterteilung: **26.11.2014**
(21) Anmeldenummer: 10734913.6
(22) Anmeldetag: 09.07.2010
(51) Int. Cl.: B65G 1/14

(54) **STAPELSÄULE**
STACKING COLUMN
COLONNE D' EMPILAGE

(30) Priorität: 09.07.2009 DE 102009032680
(43) Veröffentlichungstag der Anmeldung: 16.05.2012
(73) Patentinhaber: MTS Maschinenbau GmbH, 88512 Mengen (DE)
(72) Erfinder: STROBEL, Gustav, 88348 Bad Saulgau (DE)
(74) Vertreter: Weiss, Peter
(86) Internationale Anmeldenummer: PCT/EP2010/004190
(87) Internationale Veröffentlichungsnummer: WO 2011/003619

(56) Entgegenhaltungen:
- EP-A1- 1 340 697
- WO-A1-2009/156116
- DE-A1-102005 025 813
- DE-A1-102006 017 986
- DE-A1-102007 038 865
- DE-U1-202006 005 086

## Beschreibung

Die Erfindung betrifft Stapelsäulen gemäss dem Oberbegriff von Anspruch 1

### Stand der Technik

Derartige Stapelsäulen werden insbesondere zur Aufnahme von flächigen Lagergütern verwendet, wie sie bspw. bei der Herstellung von Automobilteilen anfallen. Es gibt jedoch noch eine Vielzahl von anderen Anwendungsbereichen, die von der vorliegenden Erfindung mit umfasst sein sollen.

Aus dem Stand der Technik sind vertikale und horizontale Stapelsäulen bekannt. Beispielsweise offenbart DE 38 11 307 C2 eine vertikale Stapelsäule. Dort sind zweiarmige Klinkenhebel beschrieben, die jeweils einen Lagergut aufnehmenden Tragarm sowie einen damit einstückig ausgebildeten Steuerarm aufweisen, wobei beim Auflegen eines Lagergutes ein in Bereitschaftsstellung befindlicher Klinkenhebel in eine Bereitschaftsstellung gelangt und gleichzeitig ein darüber angeordneter Klinkenhebel durch den Steuerarm des in Arbeitsstellung gelangten Klinkenhebels aus seiner Ruhestellung in eine Bereitschaftsstellung geschwenkt wird, wobei ferner sich die in Arbeitsstellung befindlichen Klinkenhebel gegenseitig in dieser Stellung verriegeln. Die Dreh- und Anschlagstellen der Klinkenhebel sind derart zueinander angeordnet, dass das zusammenwirken der einzelnen Klinkenhebel in der vertikalen Anordnung der Stapelsäule funktioniert. Für die Verwendung als horizontale Stapelsäule müssten die Klinkenhebel zueinander vollständig überarbeitet werden. Ausserdem muss bei einer Beschädigung der Klinke, der gesamte Klinkenhebel mit dem dazugehörigen Steuerarm ausgewechselt werden.

Ferner ist aus DE 40 20 864 C2 eine horizontal angeordnete Stapelsäule bekannt. Die Drehachsen für die Klinken befinden sich dort zwischen den beiden Wandstreifen und liegen in etwa horizontal. In Gebrauchslage ragen die Klinken nach oben aus den Wandstreifen heraus. Jede Klinke weist Steuerelemente auf, mit denen jeweils eine nachfolgende Klinke in Bereitschaftsstellung gebracht wird. Hier ist eine Verriegeln der Klinken in einer vertikalen Anordnung wegen eines hierfür fehlenden Riegelelements nicht möglich.

Nachteilig bei den oben genannten Stapelsäulen ist, dass deren Verriegelungselemente jeweils nur für die entsprechende horizontale oder vertikale Ausrichtung der jeweiligen Stapelsäule anwendbar sind. Wird beispielsweise die vertikale Stapelsäule aus DE 38 11 307 C2 als eine horizontal ausgerichtete Stapelsäule verwendet, kann die Funktion der Klinkenhebel nicht mehr gewährleistet werden. Dasselbe gilt für die Stapelsäulen aus DE 40 20 864 C2 für den umgekehrten Fall.

### Aufgabe

Aufgabe der vorliegenden Erfindung ist es, eine Stapelsäule bereitzustellen, die die oben genannten Nachteilige beseitigt oder wenigstens abmindert.

### Lösung der Aufgabe

Zur Lösung der Aufgabe führen die Merkmale von Anspruch 1.

Dazu ist gemäss einer Ausführungsform der Erfindung das Riegelelement zwischen einer Entriegelungsposition und einer Verriegelungsposition bewegbar. In der Entriegelungsposition des Riegelelementes ist die Klinke frei bewegbar von einer Ruheposition über eine Bereitschaftsposition und kann ungehindert über das Riegelelement in die Gebrauchslage überführt werden, ohne dass sich das Riegelelement mit der Klinke verriegelt. In der Verriegelungsposition des Riegelelementes steht jedoch das Riegelelement im verriegeltem Eingriff mit der zugehörigen Klinke. Durch diese vorteilhafte Steuerung des Riegelelements durch die Klinke wird immer gewährleistet, egal in welcher Lage die Stapelsäule angeordnet ist, sei es horizontal oder vertikal, dass durch die gesteuerte und geführte Bewegung des Riegelelements durch die Klinke immer ein Verriegeln der Klinke in der Gebrauchsstellung gewährleistet ist.

In einem bevorzugten Ausführungsbeispiel weist die Klinke ein Steuerglied auf, mittels welchem das Riegelelement geführt wird. Dieses Steuerglied kann jedoch auch an dem Riegelelement ausgebildet sein, wobei in diesem Fall die Klinke das Riegelelement mittels des Steuergliedes steuert. Das Steuerglied kann beispielsweise ein Bolzen sein, der an einem entsprechenden Endabschnitt des Riegelelements bzw. der Klinke angeordnet ist. Wesentlich ist hierbei nur, dass eine ausreichende Wirkverbindung zwischen Riegelelement und Klinke bereitgestellt wird, so dass die Klinke gesteuert das Riegelelement verfahren bzw. betätigen kann und in der Gebrauchsposition der Klinke das Riegelelement und die Klinke miteinander verriegelt sind, so dass ein weiteres Bewegen der Klinke verhindert wird.

In einer bevorzugten Ausführungsform der Klinke ist das Steuerglied an einem Anschlagendabschnitt der Klinke angeordnet. Das Steuerglied kann jedoch an jedem geeignetem Abschnitt der Klinke angeordnet sein, solange sichergestellt ist, dass eine Bewegung der Klinke von der Bereitschaftsstellung in die Gebrauchslage eine korrespondierende Bewegung des Riegelelements gewährleistet. Das Steuerglied kann ein Bolzen od. dgl. Sein, der Endabschnitte von Schenkeln eines U-förmigen Winkels überspannt. Die Schenkel-Stegverbindung des Winkels ist in diesem Fall an dem Anschlagendabschnitt der Klinke ausgebildet. Wesentlich ist hierbei, dass das Steuerglied ausreichend beabstandet zu der Klinke angeordnet ist.

Das Steuerglied kann gemäss einer ersten Ausführungsform zwischen einer Drehachse und einem Anschlagabschnitt einer Klinke angeordnet sein. Jedoch ist es auch möglich, das Steuerglied gemäss einer anderen Ausführungsform zwischen der Drehachse einer Klinke und einem dem Anschlagabschnitt der Klinke entgegengesetzten Endabschnitt anzuordnen. Die Anordnung des Steuergliedes ist jeweils abhängig von der ausgewählten Ausführungsform, beeinflusst jedoch nicht die Funktionsweise der gesteuerten Verriegelung der Klinke mit dem Riegelelement.

Dazu ist in einer bevorzugten Ausführungsform das Riegelelement einends in einem verschiebbaren Eingriff mit dem Steuerglied einer ersten Klinke bringbar und andernends steht es im schwenkbaren Eingriff mit der Drehachse einer zweiten Klinke.

Das heisst, das Riegelelement ist an einem Ende an einer Drehachse schwenkbar gelagert und mit dem anderen Ende zum Verriegeln mit einer anderen Klinke bzw. mit deren zugehörigen Steuerglied verriegelbar.

Jedoch ist es in einer anderen Ausführungsform des Riegelelements auch möglich, dass das Riegelelement an der Drehachse und dem Steuerglied ein- und derselben Klinke angeordnet ist. In diesem Fall ist das Riegelelement zwischen seiner Endriegelungs- und Verriegelungsposition mit der Klinke im Wesentlichen translatorisch verschiebbar geführt, wobei mindestens die Drehachse und das Steuerglied der jeweils bewegten Klinke mit dem Riegelelement zusammenwirken. Zusätzlich wird hierbei das Riegelelement von der Drehachse und einem Anschlagelement in seiner Bewegung beschränkt, wobei das Steuerglied eine im Wesentlichen lineare Bewegung des Riegelelements entlang einer Seitenwange bewirkt, die im wesentlichen senkrecht zur Längsrichtung der Seitenwange verläuft, wenn die Klinke von ihrer Bereitschaftsstellung in die Gebrauchsstellung bewegt wird.

Zum Zusammenwirken des Steuergliedes mit dem Riegelelement weist das Riegelelement wenigstens eine Steuerkante auf. Diese Steuerkante weist in einer bevorzugten Ausführungsform zueinander unterschiedlich geneigte Randabschnitte auf. Die Neigung der geneigten Randabschnitte zueinander kann von im wesentlichen senkrecht bis schräg reichen, d.h. die Randabschnitte können einen stumpfen aber auch einen spitzen Winkel beschreiben. Die Neigung der Randabschnitte ist von dem jeweils ausgewählten Ausführungsbeispiel des Riegelelements abhängig. Wesentlich ist hierbei nur, dass die Randabschnitte der Steuerkanten einen ausreichende Führung des Steuergliedes ermöglicht.

In einem bevorzugten Ausführungsbeispiel ist an einem Randabschnitt der Steuerkante ferner eine Verriegelungsausnehmung/Steuergliedaufnahme ausgebildet. Die Verrieglungsausnehmung/Steuergliedaufnahme kann als Sackloch od. dgl. ausgebildet sein. Es ist jedoch auch im Bereich der Erfindung, dass die Ausnehmung als eine nut- oder rillenartige Vertiefung ausgebildet ist, in die das Steuerglied eingreifen kann, so dass beide miteinander zusammenwirken können. Wesentlich ist hierbei nur, dass die Verriegelungsausnehmung/Steuergliedaufnahme eine ausreichende Verriegelung des Steuergliedes in der Gebrauchslage gewährleistet.

In einer bevorzugten Ausführungsform des Riegelelements der erfindungsgemässen Stapelsäule weist das Riegelelement eine Drehachsenaufnahme auf, in der die Drehachse einer jeweiligen Klinke bewegbar geführt ist. Bewegbar geführt kann sowohl eine Drehbewegung als auch eine translatorische Bewegung umfassen.

In einem bevorzugten Ausführungsbeispiel ist das Riegelelement um die Drehachse schwenkbar, es ist jedoch auch vorstellbar, dass die Drehachse mit der jeweiligen Klinke nur in einer Längsrichtung des Riegelelements bewegbar ist.

In einem bevorzugten Ausführungsbeispiel weist das Riegelelement an einem Endabschnitt ferner einen Anschlagabschnitt auf, der die Schwenkbewegung bzw. die Längsbewegung des Riegelelements einschränkt, wobei der Anschlagabschnitt mit einem korrespondierenden Gegenanschlag zusammenwirkt, der zwischen den Seitenwangen der Stapelsäule angeordnet ist. Der Anschlagabschnitt kann als ein Winkelstreifen an dem Riegelelement oder ein separates zusätzliches Bauteil sein. Bei dem Gegenanschlag kann es sich beispielsweise jeweils um stationäre Bolzen handeln, die sich zwischen den Seitenwangen erstrecken. Anstelle der Bolzen können auch Vorsprünge vorgesehen sein, die sich aus einer Wandung bzw. einem Verbindungselement erstrecken, welches die Seitenwangen miteinander verbindet. Das Verbindungselement kann als Seitenwange, als Bolzen od. dgl. ausgebildet sein.

In einem bevorzugten Ausführungsbeispiel sind die Drehachsenaufnahme und die Steuergliedaufnahme als eine Kulisse ausgebildet, in der sowohl das Steuerglied als auch die Drehachse ein- und derselben Klinke geführt werden. Die Kulisse kann hierbei sowohl das Steuerglied als auch die Drehachse umgeben.

In einer weiteren Ausgestaltung dieses Riegelelementes ist in diesem ein Langloch vorgesehen, das eine zusätzliche Führung des Riegelelements in dessen Bewegungsrichtung, insbesondere in die Verriegelungsposition des Riegelelements mit der zugehörigen Klinke unterstützt. Hierbei sind jedoch auch andere Führungsarten möglich. Beispielsweise kann jedes Riegelelement in der entsprechenden Seitenwange einen Sitz aufweisen, der auch als Führung wirkt. Ferner kann die Translationsbewegung des Riegelelements zum Verriegeln der Klinke mit dem Riegelelement auch durch geeignete Kraftspeicherelement, wie Druck- und/oder Zugfedern unterstützt werden. Dies gilt auch für das Riegelelement, das ein Schwenkbewegung zum Verriegeln des Klinke mit dem Riegelelement durchführt.

In einer bevorzugten Ausführungsform der Stapelsäulen sind die Klinken mittels einer Rückholeinrichtung in deren Ruhelage vorgespannt. Als Rückholeinrichtungen sind Gewichte und/oder Kraftspeicherelemente in Form von Federn denkbar, die vorteilhaft gemäss dem Hebelgesetz angeordnet sein können. Die Gewichte können separate Beuteile sein, aber auch bereits als Materialabschnitte in der Klinke, beispielsweise Winkelabschnitte, integriert sein. Wesentlichen ist hierbei nur, dass die Rückholeinrichtungen jeweils dafür geeignet sind, die Klinken in die entsprechende Ruhelage zurückzubewegen, wobei dies sowohl in horizontaler als auch vertikaler Lage der Seitenwangen bzw. der Stapelsäulen möglich ist. Dazu sind in einer bevorzugten Ausführungsform der Klinke die Gewichte bzw. die Feder an entsprechend geeigneten Positionen angeordnet.

In einer weiteren bevorzugten Ausführungsform sind die einzelnen Klinken über ein Verbindungsgestänge derart miteinander verbunden, dass eine Bewegung der einen Klinke in die Gebrauchsstellung eine Verlagerung der nachfolgenden Klinke in die Bereitschaftsstellung bewirkt. Hierzu können Verbindungsstreifen vorgesehen sein, die jeweils die Steuerglieder der einzelnen Klinken miteinander verbinden. Es sind jedoch auch andere Ausgestaltungen des Verbindungsgestänges vorstellbar. Wesentlich ist hierbei nur, dass eine Verlagerung der einen Klinke in die Gebrauchsstellung eine Verlagerung der nachfolgenden Klinke in die Bereitschaftsstellung bewirkt.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
**Figuren 1 und 2** perspektivische Ansichten eines ersten Ausführungsbeispiels einer erfindungsgemässen Stapelsäule;
**Figur 3** eine perspektivische Teilschnittansicht der Stapelsäule nach Figur 1 nach Abnahme einer Seitenwange;
**Figur 4** eine perspektivische Teilschnittansicht der Stapelsäule nach Figur 2 nach Abnahme einer Seitenwange;
**Figur 5** eine Seitenansicht einer erfindungsgemässen Klinkenkette für eine Stapelsäule nach den Figuren 1 und 2;
**Figur 6** eine perspektivische Ansicht eines ersten Ausführungsbeispiels eines Riegelelementes zur Verwendung in der Stapelsäule nach den Figuren 1 und 2;
**Figur 7** eine Draufsicht auf ein weiteres Ausführungsbeispiel eines Riegelelementes zur Verwendung in der Stapelsäule nach den Figuren 1 und 2;
**Figur 8** eine Draufsicht auf ein weiteres Ausführungsbeispiel einer erfindungsgemässen Stapelsäule;
**Figuren 9 und 10** perspektivische Ansichten der Stapelsäule nach Figur 8;
**Figuren 11 und 12** perspektivische Ansichten der Stapelsäulen nach Figuren 8;
**Figur 13** eine perspektivische Teilschnittansicht der Stapelsäule nach Figur 11 nach Wegschnitt einer Seitenwange; und
**Figur 14** eine perspektivische Teilschnittansicht der Stapelsäule nach Figur 12 nach Wegschnitt einer anderen Seitenwange.

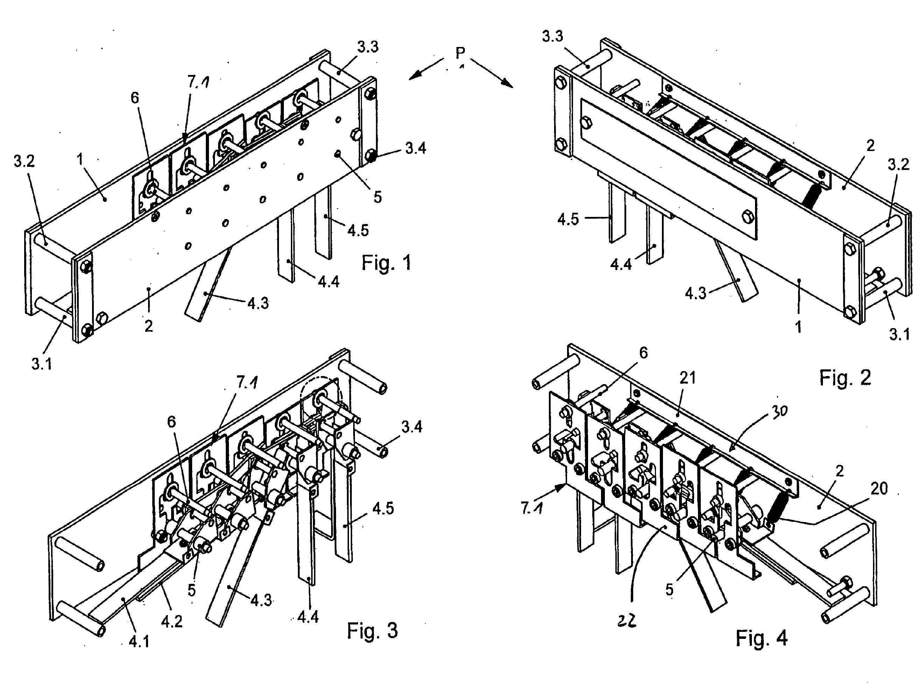

Die Figuren 1 bis 6 beschreiben eine Anordnung nach dem Stand der Technik. Die Anordnungen von Stapelsäulen des ersten und des zweiten Ausführungsbeispiels in der Zeichnung soll nicht die Anordnung der jeweiligen Stapelsäule in ihrer Verwendungsposition vorwegnehmen bzw. darauf beschränken. Vielmehr sollen die unterschiedlichen Anordnungen des ersten Ausführungsbeispiels in einer im Wesentlichen vertikalen Position und des zweiten Ausführungsbeispiels in einer im Wesentlichen horizontalen Position nur mögliche, nicht einschränkende Ausrichtungen der erfindungsgemässen Stapelsäulen veranschaulichen. Hierbei ist zu beachten, dass erfindungsgemässe Stapelsäulen gemäss P₁ und P₂ jeweils sowohl in der vertikalen Lage, wie in Figuren 1 bis 14 dargestellt, als auch in der horizontalen Lage anordnenbar sind.

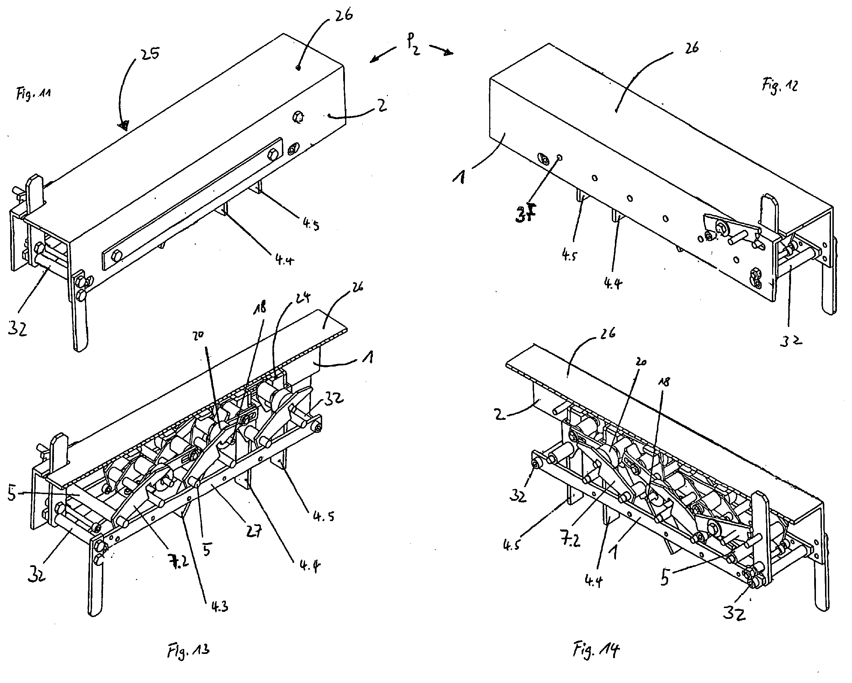

In den Figuren 1 und 2 weist ein erstes Ausführungsbeispiel einer erfindungsgemässen Stapelsäule P₁ und gemäss den Figuren 11 und 12 ein zweites Ausführungsbeispiel einer Stapelsäule P₂ Seitenwangen 1, 2 auf, Im ersten Ausführungsbeispiel sind beide Seitenwangen 1 und 2 über ein Verbindungselement 3.1 bis 3.4 miteinander verbunden. Im zweiten Ausführungsbeispiel sind die Seitenwangen 1 und 2 anstelle über die Verbindungselemente 3.1 bis 3.4 über eine Rückwand 26 miteinander verbunden.

Die Klinken 4.1 bis 4.5 beider Ausführungsbeispiele sind jeweils über die Drehachse 5 von einer Ruheposition über eine Bereitschaftsposition in eine Gebrauchsposition schwenkbar geführt. In den Figuren 1 bis 5 und 8 bis 14 sind die dort dargestellten Klinken 4.1 bis 4.5 in ihren drei möglichen Positionen dargestellt. Die Klinken 4.1 und 4.2 befinden sich in der Ruheposition, die Klinke 4.3 ist der Bereitschaftsposition und die Klinken 4.4 bis 4.5 sind in der Gebrauchsposition.

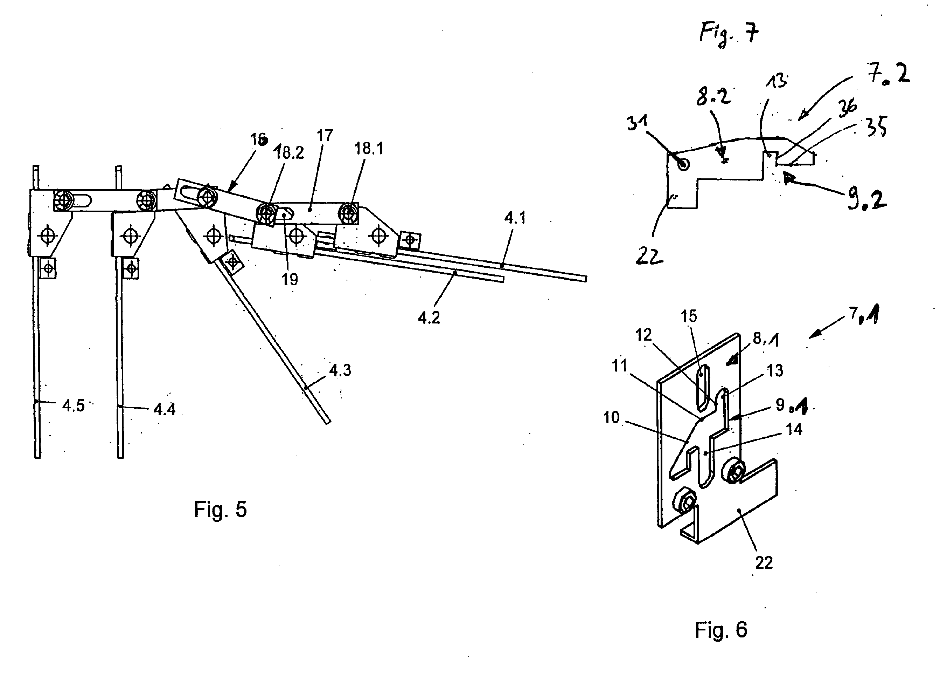

Sowohl im ersten Ausführungsbeispiel als auch im zweiten Ausführungsbeispiel ist jeder Klinke 4.1 bis 4.5 ein Riegelelement 7.1 bzw. 7.2 zugeordnet, welches in Figur 6 für das erste Ausführungsbeispiel mit 7.1 und in Figur 7 für das zweite Ausführungsbeispiel mit 7.2 vergrössert dargestellt ist.

In Figur 6 ist das Riegelelement 7.1 des ersten Ausführungsbeispiels der Stapelsäule P₁ dargestellt. Hier bilden eine Steuergliedaufnahme 13 zusammen mit Randabschnitten 11 und 12, die eine Steuerkante 10 ausbilden, und eine Drehachsenaufnahme 14 eine zusammenhängende Kulisse 9.1 aus. In der Kulisse 9.1 werden sowohl die Drehachse 5 als auch ein jeweiliges Steuerglied 18 der zugeordneten Klinken 4.1 bis 4.5 geführt. Ferner ist in dem Riegelelement 7.1 zusätzlich zur Beschränkung der Bewegungsrichtung des Riegelelements 7.1 ein Langloch 15 ausgebildet, in das ein Anschlagelement 6 eingreift. Mittels der Drehachsenaufnahme 14 und des Langlochs 15 wird das Riegelelement 7.1 in etwa vertikaler Ebene geführt.

In Figur 7 ist das Riegelelement 7.2 des zweiten Ausführungsbeispiels der erfindungsgemässen Stapelsäule P₂ dargestellt. Das Riegelelement 7.2 weist an einem Endabschnitt eine Drehachsenaufnahme 31 auf, mittels der das Riegelelement 7.2 schwenkbar auf der Drehachse 5 gelagert ist. An dem der Drehachsenaufnahme 31 gegenüberliegenden Ende des Riegelelementes 7.2 ist die Steuergliedaufnahme 13 ausgebildet, an die sich zwei Randabschnitte 35 und 36 anschliessen, die als eine Steuerkante 9.2 wirken. Mit Hilfe der Randabschnitte 35 und 36 wird das Steuerglied 18 der Klinke 4 hin zu der Steuergliedaufnahme 13 geführt, mit der das Steuerglied 18 sich in der Gebrauchslage der Klinke verriegelt.

Wie in Figur 5 erkennbar, sind im ersten Ausführungsbeispiel die Klinken 4.1 bis 4.5 über ein Verbindungsgestänge 16 miteinander verbunden, wobei das Verbindungsgestänge 16 aus einzelnen Verbindungsstreifen 17 zusammengesetzt ist. Jeder Verbindungsstreifen 17 ist einends gelenkig mit dem Steuerglied 18.1 der vorangehenden Klinke verbunden, während ein andernends vorgesehenes Langloch 19 von einem Steuerglied 18.2 der nachfolgenden Klinke 4.2 durchsetzt wird.

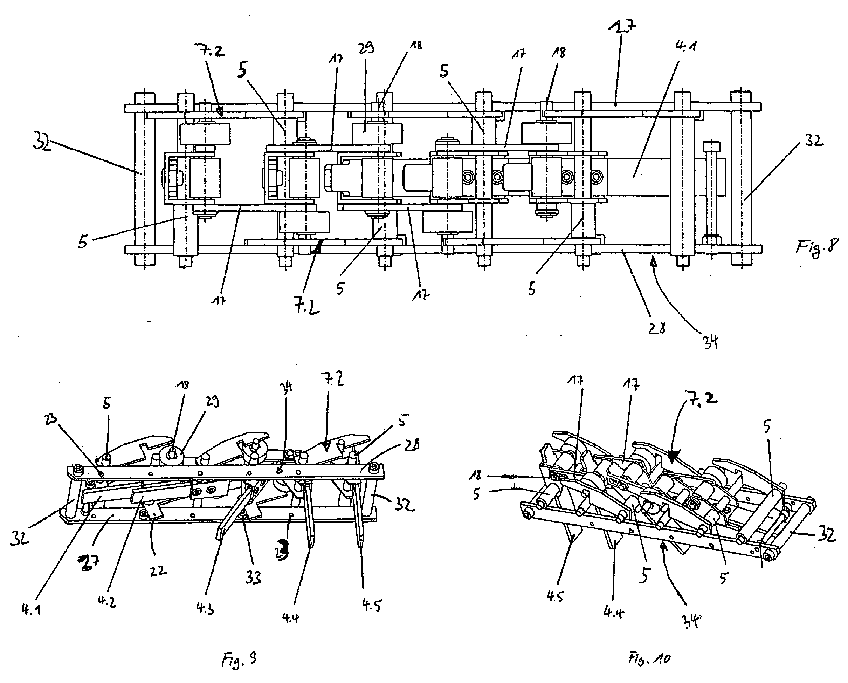

Die Verbindung der Klinken 4.1 bis 4.5 beim zweiten Ausführungsbeispiel wird durch die Verbindungsstreifen 17, die jeweils, wie in Figur 8 gezeigt, wechselseitig angeordnet sind. Im Gegensatz dazu sind die Verbindungsstreifen 17 des ersten Ausführungsbeispiels auf derselben Seite angeordnet.

Die einzelnen Klinken 4.1 bis 4.5 der Stapelsäule P₁ sind jeweils von einer Zugfeder 20 in ihre Ruheposition vorgespannt. Hierzu ist jede Klinke 4.1 bis 4.5 über die Zugfeder 20 mit einem Winkelstreifen 21 verbunden, wobei der Winkelstreifen 21 an der Seitenwange 2 festliegt. Gemeinsam wirken der Winkelstreifen 21 und die Zugfeder 20 als eine Rückholeinrichtung 30, die die jeweilige Klinke 4.1 bis 4.5 in ihrer Ruhelage vorspannt.

Bei den Klinken 4.1 bis 4.5 der Stapelsäule P₂ sind als Rückholeinrichtung ringförmige Gewichte 29 vorgesehen (siehe Figuren 9 bis 10), die über Splintsicherungen an Bolzen der Steuerglieder 18 gesichert sind. Die Klinken 4.1 bis 4.5 sind mit den Gewichten 29 derart ausbalanciert, dass die Gewichte 29 diese in ihre Ruheposition drücken. Das jeweilige Gewicht 29 ist bevorzugt hinter der Drehachse 5 der Klinke 4.1 bis 4.5 der der Klinke 4.1 bis 4.5 zugehörigen Steuerglieder 18 angeordnet (siehe Figur 13).

Zwischen den Seitenwänden 1 und 2 der Stapelsäule P₁ sind an einer geeigneten Position die Anschlagelemente 6 herausgebildet (siehe Figuren 3 und 4), die als Gegenanschläge für einen Anschlagendabschnitt, der an jeder Klinke 4.1 bis 4.5 (siehe Figur 5) zum Beschränken deren Schwenkbewegungen in Gebrauchslage ausgebildet ist (siehe Figur 3).

Im Ausführungsbeispiel der Stapelsäule P₂ sind an der Rückwand 26 eines Gehäuses 25 an einer geeigneten Position Anschlagendabschnitte 24 ausgebildet (siehe Figuren 13 und 14), die als Stopper zum Beschränken der Schwenkbewegungen der Klinken 4.1 bis 4.5 vorgesehen sind. Die Anschlagendabschnitte 24 sind an der Rückwand 26 derart angeordnet, dass sie jeweils mit einem Endabschnitt der entsprechenden Klinke 4.1 bis 4.5 in Wirkverbindung stehen, wenn die Klinke 4.1 bis 4.5 in ihrer Gebrauchsstellung ist.

In den Figuren 8 bis 10 ist neben der Klinkenkette eine Entriegelungsvorrichtung 34 gezeigt, die zwei im Wesentlichen parallel angeordneten, zueinander beabstandeten Montagestreifen 27 und 28 aufweist, die über zwei an ihren Endabschnitten angeordneten Verbindungsbolzen 32 miteinander befestigt sind. An den Montagestreifen 27 und 28 sind in regelmässigen Abständen wechselseitig Vorsprünge 33 vorgesehen, die mit einem Endabschnitt, insbesondere einem Anschlagabschnitt 22 eines Riegelelementes 7.2 in Eingriff stehen (siehe Figuren 9 und 10). Mit Hilfe der Entriegelungsvorrichtung 34 werden die einzelnen Riegelelemente 7.2 aus einer Gebrauchsstellung, in der das Steuerglied 18 mit der Steuergliedaufnahme 13 des Riegelelementes 7.2 in Eingriff steht, derart verschoben, dass die Klinken 4.1 bis 4.5 in ihre Ruhelage zurückschwenken können.

Ferner sind in den Montagestreifen 27 und 28 Montageöffnungen 23 vorgesehen, die mit zugehörigen Montageöffnungen 37 in dem Gehäuse 25 der Stapelsäule P₂ korrespondieren, so dass geeignete Befestigungselemente, wie Bolzen oder Schrauben, durch beide Montageöffnungen 23 und 37 zum Sichern der Entriegelungsvorrichtung 34 in dem Gehäuse 25 einsetzbar sind.

Das jeweilige Riegelelement 7.1 bzw. 7.2 ist ähnlich wie die jeweilige Klinke 4.1 bis 4.5 um die Drehachse 5 schwenkbar. In dem ersten Ausführungsbeispiel der Stapelsäule P₁ ist die Drehachse 5 des Riegelelementes 7.1 mit der Drehachse 5 der Klinke 4 identisch. Das Riegelelement 7.1 wirkt somit mit der Drehachse 5 als auch mit dem Anschlagelement 6 zusammen, so dass beim ersten Ausführungsbeispiel jedes Riegelelement 7.1 der Stapelsäule P₁ im wesentlichen translatorisch gelagert ist (siehe Figuren 3 und 4).

In dem Ausführungsbeispiel der Stapelsäule P₂ ist das Riegelelement 7.2 schwenkbar gelagert. Allerdings ist die Drehachse 5 des Riegelelementes 7.2 nicht mit der Drehachse 5 der Klinken 4.1 bis 4.5 identisch, die das Riegelelement 7.2 verriegeln soll, sondern ist der Drehachse 5 einer nachfolgenden Klinke 4 zugeordnet. Das Riegelelement 7.2 der ersten Klinke 4.1 weist eine eigene Drehachse 5 auf, an der keine Klinke angeordnet ist (siehe Figuren 10 und 13). Ausserdem sind die Riegelelemente 7.2 wie in Figur 8 dargestellt alternierend wie die Verbindungsstreifen 17 des Verbindungsgestänges 16 angeordnet.

Die Funktionsweise der erfindungsgemässen Stapelsäule P₁ ist wie folgt:
In einer Grundposition befinden sich die Klinken 4.1 bis 4.4 in Ruheposition und nur die Klinke 4.5 befindet sich in Bereitschaftsposition. In den Figuren 1 bis 5 sind nur die Klinken 4.1 und 4.2 in Ruheposition, die Klinke 4.3 in Bereitschaftsposition und die Klinken 4.4 und 4.5 in Gebrauchsposition.

Wenn sich die Klinken in ihrer Ruheposition befinden, ist das Steuerglied 18 der einzelnen Klinken 4.1 und 4.5 frei bewegbar hin zu der Bereitschaftsposition und nicht verriegelt (Entriegelungsposition).

In Bereitschaftsstellung befindet sich das Steuerglied 18 der entsprechenden Klinke an der Steuerkante 10 der Kulisse 9.1 des Riegelelementes 7.1. Wird nun die entsprechende Klinke durch einen zu lagernden Gegenstand belastet, schwenkt die Klinke um die Drehachse 5 von der Bereitschaftsstellung (Klinke 4.3) in die Gebrauchsstellung, wobei das Steuerglied 18 die Steuerkante 10 und die Randabschnitte 11 und 12 abläuft, bis es in die Steuergliedaufnahme 13 einfährt. In dieser Verriegelungsposition des Steuergliedes 18 in der Steuergliedaufnahme 13 ist die Klinke in ihrer Gebrauchsposition und gegen weitere Bewegungen arretiert.

Wird die Stapelsäule P₁ als vertikale Stapelsäule verwendet, so fällt das Riegelelement 7.1 bei Überschreiten des waagerechten Randabschnittes 11 der Steuerkante 10 unter dem Einfluss der Schwerkraft vertikal nach unten, wodurch das Steuerglied 18 in die Steuergliedaufnahme 13 gelangt. Handelt es sich dagegen um eine horizontale Stapelsäule, so wird das Riegelelement 7.1 entsprechend durch ein beliebiges Hilfsmittel, wie beispielsweise die Zugfeder 20 angehoben. Die horizontale Stapelsäule ist auch als vertikale Stapelsäule verwendbar.

Während dem Schwenken in die Gebrauchsposition läuft das Steuerglied 18 das Langloch 19 in dem Verbindungsstreifen 17 ab und drückt die nachfolgende Klinke in die Bereitschaftsposition. Nunmehr kann die nachfolgende Klinke mit einem Lagergut belastet werden.

Zum Freigeben der Verriegelungsposition wird ein vertikaler Druck auf ein oder die Riegelelemente 7.1 ausgeübt. Auf diese Weise gelangen die Steuerglieder 18 ausser Eingriff mit den Steuergliedaufnahmen 13 und geben so die Klinken für ein Schwenken um die Drehachsen 5 frei. Dieses Schwenken wird durch die Zugfedern 20 unterstützt. Lediglich die letzte Klinke 4.5 gelangt dabei nicht in die Ruheposition, sondern wird durch einen entsprechenden Anschlag an einer der beiden Seitenwangen 1 oder 2 in Bereitschaftsstellung gehalten.

Die Funktionsweise des zweiten Ausführungsbeispiels der Stapelsäule P₂ unterscheidet sich zu oben genanntem Ausführungsbeispiel dadurch, dass aufgrund der Ausbildung der Riegelelemente 7.2 und der Klinken, die am Steuerglied 18 mit einem Gewicht 29 versehen sind, und die Stapelsäule sowohl in horizontaler as auch in vertikaler Position verwendbar ist, ohne das an dem Riegelelement 7.2 eine Zugfeder wirkt. Ausserdem wirkt hier der Anschlagabschnitt 22 des Riegelelementes 7.2 mit dem an der Entriegelungsvorrichtung 34 vorgesehenen Vorsprung 33 zusammen, womit die Verriegelung zwischen Riegelelement 7.2 und Klinken 4.1 bis 4.5 gelöst werden kann. Die Klinken 4.1 bis 4.5 können aus ihrer Verriegelungsposition mit dem zugehörigen Riegelelement 7.2 in eine Entriegelungsposition verschoben werden, so dass die Klinken 4.1 bis 4.5 von der Gebrauchsposition in die Ruheposition überführt werden können.

In einer Grundstellung des zweiten Ausführungsbeispiels befinden sich alle Klinken 4.1 bis 4.5 in der Ruheposition. Die Ruheposition der Klinken ist beispielhaft mit den Klinken 4.1 und 4.2 in Figur 8 bzw. 9 gezeigt.

In der in Figur 9 gezeigten Ruheposition der Klinke 4.2 ist das Steuerglied 18 der Klinke 4.2 ausser Eingriff mit dem Riegelelement 7.2. Erst wenn die Klinke 4.2 in Bereitschaftsposition bewegt wird, kommt das Steuerglied 18 in Eingriff mit dem Randabschnitt 35 des Riegelelements 7.2. Wird nun die Klinke 4.2 von Figur 9 von der Bereitschaftsposition in die Gebrauchsposition bewegt, wird das Steuerglied 18 entlang des Randabschnitts 35 zu dem Randabschnitt 36 hin zu der Steuergliedaufnahme 13 des Riegelelementes 7.2 geführt. Die Randabschnitte 35 und 36 und die Steuergliedaufnahme 13 bilden zusammen in dem Riegelelement 7.2 eine offene Kulisse 9.2 aus, wie in Figur 7 gezeigt. Wenn die Klinke 4.2 ihre Gebrauchsposition erreicht hat, verriegelt das Steuerglied 18 mit der Steuergliedaufnahme 13.

Soll nun diese Verriegelung aufgehoben werden, werden die Anschlagabschnitte 22 der Riegelelemente 7.2 mittels der

Entriegelungsvorrichtung 34 betätigt, so dass die Verriegelung mit dem Steuerglied 18 der Klinke 4.1 und der Steuergliedaufnahme 13 des Riegelelementes 7.2 aufgehoben wird. Hierdurch wird dann allen Klinken 4.1 bis 4.5, die mit dem zugehörigen Riegelelement 7.2 verriegelt sind, ermöglicht, in die Ruheposition zurückzuschwenken, in die sie aufgrund des Gewichtes 29 vorgespannt sind. Die bereits in der Ruheposition befindlichen Klinken verbleiben hierbei in dieser.

Das Überführen der jeweiligen Klinken 4.1 bis 4.5 von der Ruheposition über die Bereitschaftsposition in die Gebrauchsposition erfolgt im zweiten Ausführungsbeispiel auf ähnliche Weise wie beim ersten Ausführungsbeispiel über die Verbindungsstreifen 17, wie in den Figuren 8 bis 10 dargestellt.

**Bezugszeichenliste**

| | | | | | |
|---|---|---|---|---|---|
| 1 | Seitenwange | 34 | Entriegelungsvorrichtung | 67 | |
| 2 | Seitenwange | 35 | Randabschnitt | 68 | |
| 3 | Verbindungselement | 36 | Randabschnitt | 69 | |
| 4 | Klinke | 37 | Montageöffnung | 70 | |
| 5 | Drehachse | 38 | | 71 | |
| 6 | Anschlagelemente | 39 | | 72 | |
| 7 | Riegelelement | 40 | | 73 | |
| 8 | | 41 | | 74 | |
| 9.1 | Kulisse | 42 | | 75 | |
| 9.2 | Steuerkante | | | | |
| 10 | Steuerkante | 43 | | 76 | |
| 11 | Randabschnitt | 44 | | 77 | |
| 12 | Randabschnitt | 45 | | 78 | |
| 13 | Steuergliedaufnahme | 46 | | 79 | |
| 14 | Drehachsenaufnahme | 47 | | | |
| 15 | Langloch | 48 | | | |
| 16 | Verbindungsgestänge | 49 | | | |
| 17 | Verbindungsstreifen | 50 | | | |
| 18 | Steuerglied | 51 | | | |
| 19 | Langloch | 52 | | | |
| 20 | Zugfeder | 53 | | | |
| 21 | Winkelstreifen | 54 | | P₁ | Stapelsäule |
| 22 | Anschlagabschnitt | 55 | | P₂ | Stapelsäule |
| 23 | | 56 | | | |
| 24 | Anschlagendabschnitt | 57 | | | |
| 25 | Gehäuse | 58 | | | |
| 26 | Rückwand | 59 | | | |
| 27 | Montagestreifen | 60 | | | |
| 28 | Montagestreifen | 61 | | | |
| 29 | Gewicht | 62 | | | |
| 30 | Rückholeinrichtung | 63 | | | |
| 31 | Drehachsenaufnahme | 64 | | | |
| 32 | Verbindungsbolzen | 65 | | | |
| 33 | Vorsprung | 66 | | | |

## Patentansprüche

1. Stapelsäule (P1, P2) zum Arretieren von Lagergut mittels einer Mehrzahl von Klinken (4.1 bis 4.5), die an einer Seitenwange (1, 2) um eine Drehachse (5) aus einer Ruheposition über eine Bereitschaftsposition in eine Gebrauchsposition schwenkbar angeordnet ist,
**dadurch gekennzeichnet,**
**dass** die Position eines Riegelelements (7.1, 7.2) zwischen einer Entriegelungsposition und einer Verriegelungsposition von der Klinke (4.1 bis 4.5) beim Übergang der Klinke (4.1 bis 4.5) von der Bereitschaftsposition in die Gebrauchsposition steuerbar ist, wobei eine Entriegelungsvorrichtung 34 vorhanden ist, die zwei im Wesentlichen parallel angeordnete, zueinander beabstandete Montagestreifen (27, 28) aufweist, die über zwei an ihren Endabschnitten angeordneten Verbindungsbolzen (32) miteinander befestigt sind, wobei an den Montagestreifen (27, 28) in regelmässigen Abständen wechselseitig Vorsprünge (33) vorgesehen sind, die mit einem Anschlagabschnitt (22) eines der Riegelelemente (7.1, 7.2) in Eingriff bringbar sind.

2. Stapelsäule nach Anspruch 1, **dadurch gekennzeichnet, dass** ein Steuerglied (18) zwischen der Drehachse (5) und einem Anschlagendabschnitt (24) der Klinke (4.1 bis 4.5) angeordnet ist.

3. Stapelsäule nach Anspruch 2, **dadurch gekennzeichnet, dass** das Riegelelement (7.2) einends in verschiebbarem Eingriff mit dem Steuerglied (18) einer ersten Klinke (4.1 bis 4,5) bringbar ist und andernends in schwenkbaren Eingriff mit der Drehachse (5) einer zweiten Klinke (4.1 bis 4.5) steht.

4. Stapelsäule nach Anspruch 2 oder 3, **dadurch gekennzeichnet, dass** das Riegelelement (7.1) sowohl einends in verschiebbarem Eingriff mit dem Steuerglied (18) als auch andernends in verschiebbarem Eingriff mit der Drehachse (5) derselben Klinke (4.1 bis 4.5) steht.

5. Stapelsäule nach wenigstens einem der vorherigen Ansprüche, **dadurch gekennzeichnet, dass** eine Vorspannung des Riegelelements (7.1, 7.2) in einer Verriegelungsposition mittels einer Zugfeder (20) und/oder mittels des Eigengewichts des Riegelelements (7.2, 7.2) erzielt wird.

6. Stapelsäule nach wenigstens einem der vorherigen Ansprüche, **dadurch gekennzeichnet, dass** das Riegelelement (7.1, 7.2) eine Steuerkante (10, 9.2) aufweist, mit der das Steuerglied (18) in verschiebbarem Eingriff ist, so dass, wenn die Klinke (4.1 bis 4.5) von der Bereitschaftsposition in die Gebrauchsposition bewegt wird, das Riegelelement (7.1, 7.2) von einer Entriegelungsposition in eine Verriegelungsposition mittels des Steuergliedes (18) bewegt wird.

7. Stapelsäule nach Anspruch 6, **dadurch gekennzeichnet, dass** die Steuerkante (10, 9.2) unterschiedlich zueinander geneigte Randabschnitte (11, 12, 35, 36) aufweist.

8. Stapelsäule nach Anspruch 7, **dadurch gekennzeichnet, dass** das Riegelelement (7.1, 7.2) an einem Randabschnitt (12, 36) eine Steuergliedaufnahme (13) aufweist, mit der das Steuerglied (18) verriegelbar ist.

9. Stapelsäule nach wenigstens einem der vorherigen Ansprüche , **dadurch gekennzeichnet, dass** in dem Riegelelement (7.1, 7.2) eine Drehachsenaufnahme (14, 31) ausgebildet ist, in der die Drehachse (5) der Klinke (4.1 bis 4.5) bewegbar geführt ist.

10. Stapelsäule nach wenigstens einem der vorherigen Ansprüche, **dadurch gekennzeichnet, dass** das Riegelelement (7.2) einen Anschlagabschnitt (22) zum Begrenzen der Bewegung des Riegelelements (7.2) aufweist.

11. Stapelsäule nach wenigstens einem der vorherigen Ansprüche, **dadurch gekennzeichnet, dass** die Steuergliedaufnahme (13) und die Drehachsenaufnahme (14) eine Kulisse (9.1) ausbilden.

12. Stapelsäule nach wenigstens einem der vorherigen Ansprüche, **dadurch gekennzeichnet, dass** in dem Riegelelement (7.1) ein Langloch (15) zum Begrenzen und zum Führen der Bewegung des Riegelelements (7.1) vorgesehen ist.

13. Stapelsäule nach wenigstens einem der vorherigen Ansprüche, **dadurch gekennzeichnet, dass** die Klinke (4.1 bis 4.5) mittels einer Rückholeinrichtung (30) in ihre Ruheposition vorgespannt ist.

14. Stapelsäule nach Anspruch 13, **dadurch gekennzeichnet, dass** die Rückholeinrichtung ein Gewicht (29) und/oder die Zugfeder (20) ist.

## Claims

1. A stacking column (P1, P2) for securing stored goods in position by means of a plurality of pawls (4.1 to 4.5) arranged on a lateral cheek (1, 2) so as to be pivotable about a pivot (5) from a rest position into a utilization position via a readiness position, **characterized in that** the position of a locking element (7.1, 7.2) between an unlocking position and a locking position is controllable by the pawl (4.1 to 4.5) upon passage of the pawl (4.1 to 4.5) from the readiness position into the utilization position, wherein an unlocking device 34 is present, which has two mounting strips (27, 28), arranged substantially parallel and being at a distance from one another, which are secured to one another via two connecting bolts (32) arranged at their end portions, wherein projections (33) are provided alternately on the mounting strips (27, 28) at regular distances, which projections can be brought into engagement with a stop portion (22) of one of the locking elements (7.1, 7.2).

2. A stacking column according to claim 1, **characterized in that** a control member (18) is arranged between the pivot (5) and a stop end portion (24) of the pawl (4.1 to 4.5).

3. A stacking column according to claim 2, **characterized in that** one end of the locking element (7.2) can be brought into displaceable engagement with the control member (18) of a first pawl (4.1 to 4.5) and the other end pivotably engages the pivot (5) of a second pawl (4.1 to 4.5).

4. A stacking column according to claim 2 or 3, **characterized in that** one end of the locking element (7.1) can be brought into displaceable engagement with the control member (18) and the other end displaceably engages the pivot (5) of the same pawl (4.1 to 4.5).

5. A stacking column according to at least one of the preceding claims, **characterized in that** a prestressing of the locking element (7.1, 7.2) in a locking position by means of a tension spring (20) and/or by means of the dead weight of the locking element (7.2, 7.2) is achieved.

6. A stacking column according to at least one of the preceding claims, **characterized in that** the locking element (7.1, 7.2) has a control edge (10, 9.2) which the control member (18) displaceably engages, so that when the pawl (4.1 to 4.5) is moved from the readiness position into the utilization position, the locking element (7.1, 7.2) is moved from an unlocking position into a locking position by means of the control member (18).

7. A stacking column according to claim 6, **characterized in that** the control edge (10, 9.2) has edge portions (11, 12, 35, 36) at differing inclines to one another.

8. A stacking column according to claim 7, **characterized in that** on an edge portion (12, 36), the locking element (7.1, 7.2) has a control member receiver (13) to which the control member (18) is lockable.

9. A stacking column according to at least one of the preceding claims, **characterized in that** in the locking element (7.1, 7.2) there is formed a pivot receiver (14, 31) in which the pivot (5) of the pawl (4.1 to 4.5) is movably guided.

10. A stacking column according to at least one of the preceding claims, **characterized in that** the locking element (7.2) has a stop portion (22) to limit the motion of the locking element (7.2).

11. A stacking column according to at least one of the preceding claims, **characterized in that** the control member receiver (13) and the pivot receiver (14) form a slotted link (9.1).

12. A stacking column according to at least one of the preceding claims, **characterized in that** a slot (15) for limiting and guiding the motion of the locking element (7.1) is provided in the locking element (7.1).

13. A stacking column according to at least one of the preceding claims, **characterized in that** the pawl (4.1 to 4.5) is prestressed into its rest position by means of a return motion device (30).

14. A stacking column according to claim 13, **characterized in that** the return motion device is a weight (29) and/or the tension spring (20).

## Revendications

1. Colonne d'empilage (P1, P2) pour arrêter des marchandises à stocker au moyen d'une pluralité de poignées (4.1 à 4.5) qui sont disposées de manière pivotante sur une joue latérale (1, 2) autour d'un axe de rotation (5), d'une position de repos, en passant par une position d'attente, à une position d'utilisation,
**caractérisée par le fait que**
la position d'un élément de verrouillage (7.1, 7.2) entre une position de déverrouillage et une position de verrouillage de la poignée (4.1 à 4.5) peut être commandée lors de la transition de la poignée (4.1 à 4.5) de la position d'attente à la position d'utilisation, un dispositif de déverrouillage 34 étant présent, lequel présente deux bandes de montage espacées (27, 28) disposées sensiblement parallèles entre elles et qui sont fixées l'une à l'autre par deux boulons de connexion (32) disposés sur leurs segments d'extrémité, sur les bandes de montage (27, 28) étant prévues en alternance, à intervalles réguliers, des saillies (33) qui peuvent être amenées en prise avec un segment de butée (22) de l'un des éléments de verrouillage (7.1, 7.2).

2. Colonne d'empilage selon la revendication 1, **caractérisée par le fait qu'**un élément de commande (18) est disposé entre l'axe de rotation (5) et un segment de butée (24) de la poignée (4.1 à 4.5).

3. Colonne d'empilage selon la revendication 2, **caractérisée par le fait que** l'élément de verrouillage (7,2) peut, à une extrémité, être amené en prise déplaçable avec l'élément de commande (18) d'une première poignée (4.1 à 4.5) et peut, à l'autre extrémité, être amené en prise pivotante avec l'axe de rotation (5) d'une deuxième poignée (4.1 à 4.5).

4. Colonne d'empilage selon la revendication 2 ou 3, **caractérisée par le fait que** l'élément de verrouillage (7.1) est tant à une extrémité en prise déplaçable avec l'élément de commande (18) qu'à l'autre extrémité en prise déplaçable avec l'axe de rotation (5) de la même poignée (4.1 à 4.5).

5. Colonne d'empilage selon au moins l'une des revendications précédentes, **caractérisée par le fait qu'**une prétension de l'élément de verrouillage (7.1, 7.2) dans une position de verrouillage est obtenue à l'aide d'un ressort de traction (20) et/ou à l'aide du poids propre de l'élément de verrouillage (7.2, 7.2).

6. Colonne d'empilage selon au moins l'une des revendications précédentes, **caractérisée par le fait que** l'élément de verrouillage (7.1, 7.2) présente une arête de commande (10, 9.2) avec laquelle l'élément de commande (18) est en prise déplaçable, de sorte que, lorsque la poignée (4.1 à 4,5) est déplacée de la position d'attente à la position d'utilisation, l'élément de verrouillage (7.1, 7.2) est déplacé d'une position de déverrouillage en une position de verrouillage au moyen de l'élément de commande (18).

7. Colonne d'empilage selon la revendication 6, **caractérisée par le fait que** l'arête de commande (10, 9.2) présente des parties d'arête (11, 12, 35, 36) à inclinaison différente l'une par rapport à l'autre.

8. Colonne d'empilage selon la revendication 7, **caractérisé par le fait que** l'élément de blocage (7.1, 7.2) présente, à une partie de bord (12, 36), un moyen de réception d'élément de commande (13) avec lequel est verrouillable l'élément de commande (18).

9. Colonne d'empilage selon au moins l'une des revendications précédentes, **caractérisée par le fait que** dans l'élément de verrouillage (7.1, 7.2) est formé un moyen de réception d'axe de rotation (14, 31) dans lequel est guidé de manière déplaçable l'axe de rotation (5) de la poignée (4.1 à 4.5).

10. Colonne d'empilage selon au moins l'une des revendications précédentes, **caractérisée par le fait que** l'élément de verrouillage (7,2) présente un segment de butée (22) pour limiter le mouvement de l'élément de verrouillage (7,2).

11. Colonne d'empilage selon au moins l'une des revendications précédentes, **caractérisée par le fait que** le moyen de réception d'élément de commande (13) et le moyen de réception d'axe de rotation (14) forment une coulisse (9,1).

12. Colonne d'empilage selon au moins l'une des revendications précédentes, **caractérisée par le fait que** dans l'élément de verrouillage (7,1) est prévu un trou oblong (15) pour limiter et pour guider le mouvement de l'élément de verrouillage (7.1).

13. Colonne d'empilage selon au moins l'une des revendications précédentes, **caractérisée par le fait que** la poignée (4.1 à 4.5) est prétendue à l'aide d'un moyen de rappel (30) dans sa position de repos.

14. Colonne d'empilement selon la revendication 13, **caractérisée par le fait que** le moyen de rappel est un poids (29) et/ou le ressort de traction (20).
